# EUROPÄISCHE PATENTSCHRIFT

(11) **EP 3 908 420 B1**
(45) Veröffentlichungstag und Bekanntmachung des Hinweises auf die Patenterteilung: **24.04.2024**
(21) Anmeldenummer: 21704524.4
(22) Anmeldetag: 10.02.2021
(51) Int. Cl.: B23G 5/20

(54) **GEWINDEBOHR-WERKZEUG ZUR ERZEUGUNG EINER GEWINDEBOHRUNG**
TAPPING TOOL FOR PRODUCING A THREADED HOLE
TARAUDEUSE DE PRODUCTION D'UN TROU FILETÉ

(30) Priorität: 30.03.2020 DE 102020108679
(43) Veröffentlichungstag der Anmeldung: 17.11.2021
(73) Patentinhaber: Audi AG, 85045 Ingolstadt (DE)
(72) Erfinder: KOPTON, Peter, 85092 Kösching (DE)
(86) Internationale Anmeldenummer: PCT/EP2021/053189
(87) Internationale Veröffentlichungsnummer: WO 2021/197697

(56) Entgegenhaltungen:
- EP-A1- 0 953 396
- EP-B1- 3 458 219
- CN-A- 104 625 254
- US-A- 1 826 323

## Beschreibung

Die Erfindung betrifft ein Gewindebohr-Werkzeug nach dem Oberbegriff des Anspruches 1.

In einem sogenannten Einschuss-Gewindebohr-Prozess wird mit einem Gewindebohr-Werkzeug sowohl eine Vorbohrung (das heißt Kernbohrung) als auch eine Innengewinde-Erzeugung mit einem gemeinsamen Werkzeughub (das heißt Gewindebohr-Hub) durchgeführt. Hierzu weist das Gewindebohr-Werkzeug zumindest eine Vorbohr-Schneide und einen Gewindeerzeugungsabschnitt mit zumindest einem Bearbeitungszahn auf. In dem Verfahren erfolgt zunächst ein Gewindebohr-Hub, in dem das Gewindebohr-Werkzeug bis Erreichen einer Soll-Gewindetiefe in das nicht vorgebohrte Werkstück eintreibbar ist. Mit Erreichen der Soll-Gewindetiefe schließt sich ein Freischnitt-Hub an, in dem die Drehzahl des Gewindebohr-Werkzeugs abgebremst wird und eine Drehrichtungsumkehr erfolgt. Nach Drehrichtungsumkehr wird ein Reversier-Hub durchgeführt, bei dem das Gewindebohr-Werkzeug in einer gegensinnigen Drehrichtung aus der Werkstück-Gewindebohrung herausführbar ist. Der Bearbeitungszahn des Gewindeerzeugungsabschnittes bewegt sich dabei belastungsfrei in den Gewindegängen des Innengewindes.

Aus der EP 3 458 219 B1 ist ein gattungsgemäßes Gewindebohr-Werkzeug bekannt, das an seiner Bohrerspitze eine stirnseitige Vorbohr-Schneide zur Erzeugung einer Vorbohrung aufweist. Axial versetzt zur Bohrerspitze ist der Gewindeerzeugungsabschnitt vorgesehen, mit dem im Gewindebohr-Hub in einer Vorbohrungs-Wand ein Innengewinde-Rohprofil erzeugt wird, bei dem ein radial innerer Gewindescheitel auf einem Durchmesser liegt, der um ein Durchmesser-Aufmaß kleiner ist als der zu erzeugende Gewinde-Kerndurchmesser. Zudem weist das Gewindebohr-Werkzeug eine Senkungs-Schneide auf, mittels der am Öffnungsrand der Werkstück-Gewindebohrung eine Gewindesenkung erzeugbar ist.

Im Stand der Technik weist die im Gewindebohr-Hub erzeugte Vorbohrung bereits den Gewinde-Kerndurchmesser auf. In diesem Fall erstreckt sich die stirnseitige Vorbohr-Schneide bis zu einer radial äußeren Vorbohr-Schneiden-Ecke, die auf dem Vorbohr-Durchmesser liegt. Durch die entsprechend große Schneidenlänge der Vorbohr-Schneide ergibt sich im Gewindebohr-Hub eine entsprechend große Schneidenbelastung.

Beispielhaft sind weitere Gewindebohr-Werkzeuge aus der CN 104 625 254 A, aus der US 1 826 323 A und aus der EP 0 953 396 A1 bekannt.

Die Aufgabe der Erfindung besteht darin, ein Gewindebohr-Werkzeug bereitzustellen, bei der im Gewindebohr-Prozess die Werkzeugbelastung reduziert ist.

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil des Anspruches 1 weist das Gewindebohr-Werkzeug in der Werkzeug-Axialrichtung zwischen dem Gewindeerzeugungsabschnitt und der Senkungs-Schneide eine Anzahl von Kerndurchmesser-Schneiden auf, die im Gewindebohr-Prozess unabhängig von dem VorbohrDurchmesser der stirnseitigen Vorbohr-Schneide den Gewinde-Kerndurchmesser erzeugen können. Die Kerndurchmesser-Schneiden werden im Gewindebohr-Hub innerhalb der Gewindegänge des Innengewinde-Rohprofils geführt. Im Anschluss an den Gewindebohr-Hub erfolgt in gleicher Hubrichtung der Freischnitt-Hub, bei dem die Kerndurchmesser-Schneiden das Durchmesser-Aufmaß am radial inneren Gewindescheitel durch Spanbearbeitung bis auf den Gewinde-Kerndurchmesser abtragen.

In einer technischen Umsetzung kann jede der Kerndurchmesser-Schneiden auf einer Rückenfläche eines Bohrerstegs des Gewindebohr-Werkzeugs ausgebildet sein. Die Kerndurchmesser-Schneiden ragen dabei um eine Schneiden-Höhe von einem Schneidengrund nach radial außen ab.

Im Hinblick auf eine prozesssichere Erzeugung des Innengewindes in der Werkstück-Gewindebohrung weisen die Kerndurchmesser-Schneiden des Gewindebohr-Werkzeugs die folgende Schneiden-Geometrie auf: So weist jede der Kerndurchmesser-Schneiden eine radial äußere, entlang der Werkzeug-Achse verlaufende Längs-Schneidenkante auf. Diese liegt auf dem Gewinde-Kerndurchmesser. Die Längs-Schneidenkante kann an einer der Bohrerspitze zugewandten Schneiden-Ecke mit einer Schneidenflanke zusammenlaufen. In gleicher Weise kann die Längs-Schneidenkante an einer den Werkzeugschaft zugewandten Schneiden-Ecke mit einer Schneidenflanke zusammenlaufen. Die beiden Schneidenflanken der Kerndurchmesser-Schneide können in einem Schrägverlauf in den Schneidengrund übergehen, der auf einem Schneidengrund-Durchmesser liegt.

Im Freischnitt-Hub sind die der Bohrerspitze zugewandte Schneidenflanke der jeweiligen Kerndurchmesser-Schneide, die der Bohrerspitze zugewandte Schneiden-Ecke und die Längs-Schneidenkante aktiv, um das Durchmesser-Aufmaß abzutragen.

Zur Erzeugung der Vorbohrung kann die stirnseitige Vorbohr-Schneide des Gewindebohr-Werkzeugs an einer radial äußeren Vorbohr-Schneiden-Ecke mit einer entlang der Werkzeug-Achse verlaufenden Nebenschneide zusammenlaufen. Die radial äußere Vorbohr-Schneiden-Ecke liegt auf einem Vorbohr-Durchmesser. Dieser ist erfindungsgemäß kleiner bemessen als der Gewinde-Kerndurchmesser. Der Vorbohr-Durchmesser kann ferner kleiner oder größer als der Schneidengrund-Durchmesser bemessen sein, oder alternativ identisch mit dem Schneidengrund-Durchmesser sein.

Die Kerndurchmesser-Schneiden können entlang der Werkzeug-Achse über Schneiden-Lücken voneinander beabstandet sein. Die Schneiden-Lücken können derart bemessen sein, dass im Gewindebohr-Hub jede Kerndurchmesser-Schneide in einen Gewindegang des Innengewinde-Rohprofils einragt. Die Anzahl der Kerndurchmesser-Schneiden kann mindestens der Anzahl von Gewindegängen entsprechen.

Die obige Werkzeug-Geometrie hat im Gewindebohr-Hub die folgenden Vorteile: So werden im Gewindebohr-Hub Späne erzeugt, die in einer zum Gewindebohr-Hub gegenläufigen Spanabfuhrrichtung aus der Gewindebohrung gefördert werden. Mit Hilfe der im Gewindebohr-Hub in die Gewindegänge einragenden Kerndurchmesser-Schneiden wird prozesssicher verhindert, dass Späne in das zuvor erzeugte Gewinde-Rohprofil gelangen und dieses beschädigen.

Da der Vorbohr-Durchmesser kleiner ist als der Kern-Durchmesser kann in Gewindebohr-Hub die Vorschubkraft sowie das Drehmoment niedriger ausgelegt sein als im Stand der Technik.

In einer ersten Ausführungsvariante können die Kerndurchmesser-Schneiden entlang der Werkzeug-Achse auf identischen Kerndurchmessern liegen. Alternativ dazu können die Kerndurchmesser der Kerndurchmesser-Schneiden entlang der Werkzeug-Achse variieren.

In einer ersten Ausführungsvariante können im Gewindebohr-Hub die Kerndurchmesser-Schneiden ohne Spaneingriff in den Gewindegängen des Innengewinde-Rohprofils geführt sein. In diesem Fall ist es bevorzugt, wenn die Schneiden-Flanken der Kerndurchmesser-Schneiden im Gewindebohr-Hub auf den Gewindeflanken der Gewindegänge des zuvor erzeugten Innengewinde-Rohprofils abstützbar sind. Auf diese Weise wird im Gewindebohr-Hub eine seitliche Führung des Gewindebohr-Werkzeugs bereitgestellt.

Der Schneidengrund-Durchmesser der Kerndurchmesser-Schneiden kann in einer Ausführungsvariante kleiner oder dem Vorbohr-Durchmesser der Vorbohr-Schneiden-Ecke sein.

In einer zweiten Ausführungsvariante können im Gewindebohr-Hub die Kerndurchmesser-Schneiden nicht mehr ohne Spaneingriff, sondern vielmehr mit Spaneingriff in den Gewindegängen des Innengewinde-Rohprofils geführt sein. In diesem Fall kann im Gewindebohr-Hub ein erster Materialabtrag erfolgen, bei dem die Kerndurchmesser-Schneiden (insbesondere deren Schneidengrund) einen Teil des Durchmesser-Aufmaßes abtragen. Im anschließenden Freischnitt-Hub kann ein zweiter Materialabtrag erfolgen, bei dem Kerndurchmesser-Schneiden (insbesondere deren Längs-Schneidenkanten) den restlichen Teil des Durchmesser-Aufmaßes abtragen.

In einer weiteren Ausführungsvariante kann der Gewindeerzeugungsabschnitt mit zumindest einem Reversierzahn ausgebildet sein. Der Reversierzahn ist während des Gewindebohr-Hubs außer Spaneingriff mit dem Werkstück. Erst beim Reversier-Hub kann der Reversierzahn ein gegebenenfalls zusätzlich vorgehaltenes Flanken-Aufmaß von zum Beispiel einer spänezugewandten Gewindeflanke abtragen oder abformen, wodurch das Werkstück-Innengewinde fertigstellbar ist.

Nachfolgend ist eine bevorzugte Prozessabfolge zur Erzeugung der Gewindebohrung stichpunktartig beschrieben: Bohren und Gewinden in einem Arbeitsschritt (das heißt im Gewindebohr-Hub). Während des Gewindebohr-Hubs bewegen sich die Kerndurchmesser-Schneiden geschützt im Gewindeprofil und hindern die Späne daran in das zuvor erzeugte Gewindeprofil zu gelangen und es zu beschädigen. Die Vorbohr-Schneiden erzeugen im Gegensatz zum Stand der Technik nicht den Kerndurchmesser, sondern einen kleineren Vorbohr-Durchmesser. Da der Vorbohr-Durchmesser kleiner ist als der Kerndurchmesser, können die Vorschubkraft und das Drehmoment niedriger als im Stand der Technik sein. Beim Erreichen der Soll-Gewindetiefe erfolgt der Freischnitt-Hub, bei dem die Synchronisation von Vorschub und Drehzahl abgeschaltet wird. Beim Abbremsen des Werkzeug-Vorschubs wird die Freischnitt-Nut analog zum Stand der Technik erzeugt; zusätzlich schneiden die Kerndurchmesser-Schneiden den Kerndurchmesser. Die Kerndurchmesser-Schneiden können so angeordnet sein, dass der Kerndurchmesser entlang des Gewindes variabel sein kann. Die Werkzeug-Drehrichtung wird im Freischnitt-Hub reversiert. Zudem wird ein gegenläufiger Werkzeug-Vorschub eingeschaltet, synchronisiert und das Werkzeug durch das zuvor erzeugte Gewindeprofil aus der Bohrung kraftlos herausgeführt. Das Werkzeug kann so konstruiert werden, dass das Gewindebohr-Hub erzeugte Gewindeprofil nicht fertigbearbeitet ist. Die Fertigbearbeitung kann gegebenenfalls beim Herausführen des Werkzeugs aus der Bohrung erfolgen, nachdem das Werkzeug in der Freischnitt-Nut um eine Bearbeitungszugabe entlang der Werkzeug-Achse versetzt worden ist.

Nachfolgend sind Ausführungsbeispiele der Erfindung anhand der beigefügten Figuren beschrieben.

Es zeigen:
- Figur 1: in einer Seitenschnittdarstellung ein in einem Werkstück ausgebildetes Gewindesackloch;
- Figuren 2 und 3: unterschiedliche Ansichten eines Gewindebohr-Werkzeugs;
- Figur 4: das Gewindebohr-Werkzeug in einem stark vereinfachten Ersatzbild, das in der Zeichenebene lediglich die für die Erfindung relevanten Geometrie-Merkmale zeigt;
- Figuren 5 bis 8: Ansichten, anhand derer die Erzeugung des in der Figur 1 gezeigten Gewindesackloches veranschaulicht ist; sowie
- Figuren 9 bis 12: weitere Ausführungsbeispiele der Erfindung.

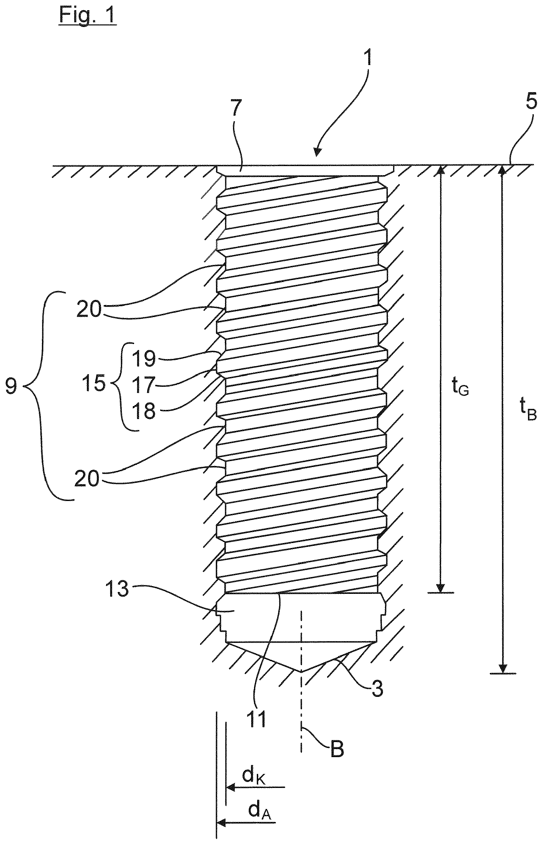

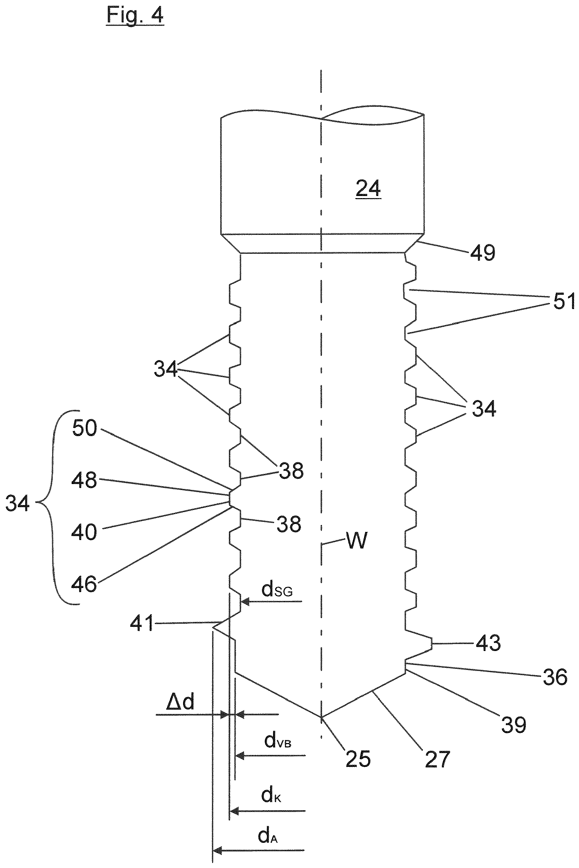

In Figur 1 ist eine fertiggestellte Werkstück-Gewindebohrung 1 gezeigt. Die Bohrung 1 ist mit ihrem Bohrungsgrund 3 bis zu einer Soll-Bohrtiefe t_{B} in ein Werkstück 5 mittels einer sogenannten Einschuss-Bohrbearbeitung eingearbeitet, die später anhand der Figuren 4 bis 8 erläutert wird. Die Gewindebohrung 1 weist an ihrer Bohrungsöffnung eine umlaufende Gewindesenkung 7 auf, die im weiteren Verlauf nach unten in ein Innengewinde 9 übergeht. Das Innengewinde 9 erstreckt sich entlang der Bohrungs-Achse B bis zu einer nutzbaren Soll-Gewindetiefe t_{G}. Wie aus der Figur 1 weiter hervorgeht, mündet ein Gewindegang 15 des Innengewindes 9 mit einem Gewindeauslauf 11 in eine umlaufende Freischnitt-Nut 13. Diese weist keine Gewindesteigung auf und ist, in der Axialrichtung betrachtet, zwischen dem Innengewinde 9 und dem Bohrungsgrund 3 ausgebildet. Der Gewindegang 15 weist einen radial äußeren Gewindegrund 17 sowie seitliche obere und untere Gewindeflanken 18, 19 auf, die radial innen in einen Gewindekern 20 übergehen. Der Gewindegrund 17 liegt auf einem Außendurchmesser d_{A}, während der Gewindekern 21 auf einem Kerndurchmesser d_{K} liegt. Die in der Figur 1 obere Gewindeflanke 19 ist die bei der Gewindebohr-Bearbeitung spänezugewandte Gewindeflanke, während die in der Figur 1 untere Gewindeflanke 18 die späneabgewandte Gewindeflanke ist.

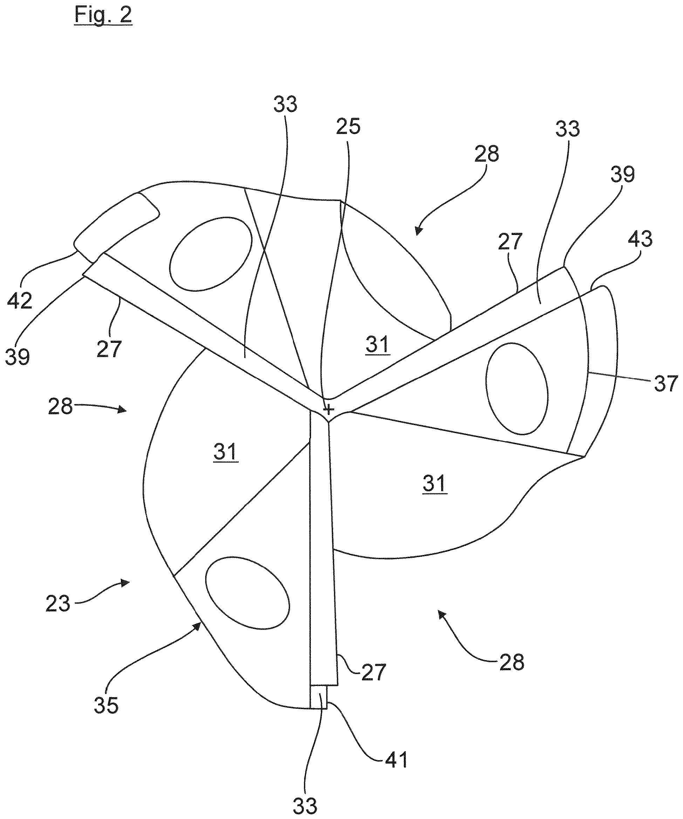

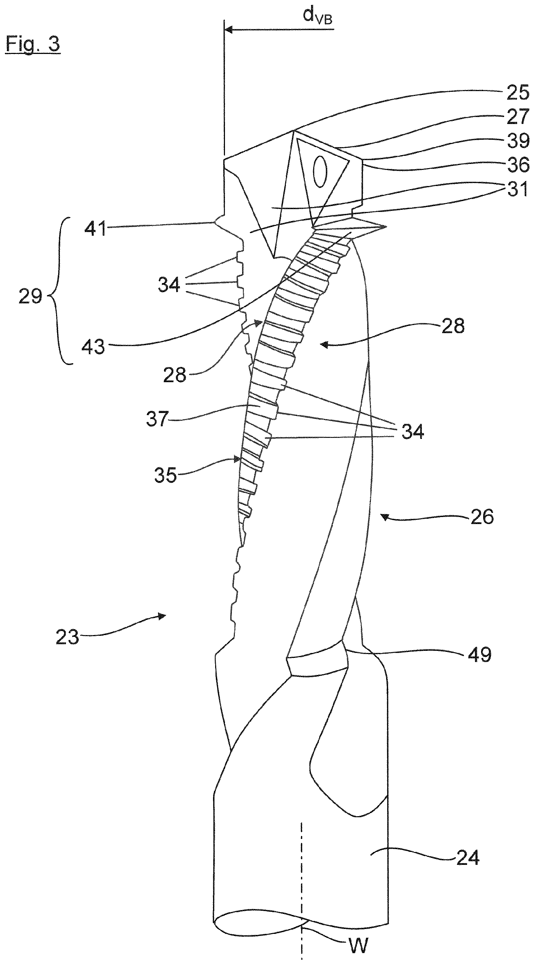

Die in der Figur 1 gezeigte Werkstück-Gewindebohrung 1 wird mit Hilfe eines nachfolgend anhand der Figuren 2, 3 und 4 beschriebenen Gewindebohr-Werkzeugs 23 hergestellt. Demzufolge weist das Werkzeug 23 in der Figur 2 an seiner Bohrerspitze 25 drei gleichmäßig umfangsverteilte stirnseitige sowie querverlaufende Vorbohr-Schneiden 27 und einen in der Gewindebohr-Richtung nacheilenden Gewindeerzeugungsabschnitt 29 (Figur 3) auf.

Das Werkzeug 23 ist in der Figur 3 mit einem Werkzeugschaft 24 sowie einem daran anschließenden Gewindebohr-Körper 26 aufgebaut, entlang dessen Werkzeug-Achse W sich insgesamt drei umfangsseitig verteilte Spannuten 28 bis zu der jeweiligen stirnseitigen Vorbohr-Schneide 27 an der Bohrerspitze 25 erstrecken. An jeder Vorbohr-Schneide 27 läuft eine, die Spannut 28 begrenzende Spanfläche 31 und eine stirnseitige Freifläche 33 (Figur 2) der Bohrerspitze 25 zusammen. In der Werkzeug-Umfangsrichtung ist die jeweilige Spannut 28 durch einen Bohrersteg 35 begrenzt. Insgesamt weist das in den Figuren 2 und 3 gezeigte Gewindebohr-Werkzeug 23 drei Bohrerstege 35 auf. Die Spanfläche 31 der Spannut 28 geht unter Bildung einer Nebenschneide 36 in eine außenumfangsseitige Rückenfläche 37 des jeweiligen Bohrerstegs 35 über. Die Nebenschneide 36 und die stirnseitige Vorbohr-Schneide 27 laufen in der Figur 3 an einer radial äußeren Vorbohr-Schneiden-Ecke 39 zusammen.

An den außenumfangsseitigen Rückenflächen 37 der drei Bohrerstege 35 weist der Gewindeerzeugungsabschnitt 29 jeweils einen Bearbeitungszahn 41, 42, 43 auf. Die Bearbeitungszähne 41, 42, 43 sind in unterschiedlichen Geometrien ausgeführt sowie mit unterschiedlichen Axialabständen an der Bohrerspitze 25 beabstandet, um die in der Figur 1 gezeigten Gewindegänge 15 des Innengewindes 9 zu erzeugen.

Das Gewindebohr-Werkzeug 23 weist am Übergang zwischen dem Gewindebohr-Körper 26 und dem Werkzeugschaft 24 eine Senkungs-Schneide 49 zur Bildung der in der Figur 1 gezeigten Gewindesenkung 7 auf.

Wie aus der Figur 3 weiter hervorgeht, sind auf der außenumfangsseitigen Rückenfläche 37 der Bohrerstege 35 jeweils Kerndurchmesser-Schneiden 34 ausgebildet, die jeweils um eine Schneiden-Höhe von einem Schneidengrund 38 nach radial außen abragen.

Jede Kerndurchmesser-Schneide 34 weist in der Figur 4 eine radial äußere, entlang der Werkzeug-Achse W verlaufende Längs-Schneidenkante 40 auf, die auf dem Gewinde-Kerndurchmesser d_{K} liegt. Die Längs-Schneidenkante 40 geht an einer, der Bohrerspitze 25 zugewandten Schneiden-Ecke 44 in eine erste Schneidenflanke 46 über. In gleicher Weise geht die Schneidenkante 40 an einer, dem Werkzeugschaft 24 zugewandten Schneiden-Ecke 48 in eine zweite Schneidenflanke 50 über. Die beiden Schneidenflanken 46, 50 laufen mit einem Schneidengrund 38 zusammen, der auf einem Schneidengrund-Durchmesser d_{SG} liegt.

Die stirnseitige Vorbohr-Schneide 27 geht an einer radial äußeren Vorbohr-Schneiden-Ecke 39 in die Nebenschneide 36 über. Die radial äußere Vorbohr-Schneiden-Ecke 39 liegt auf einem Vorbohr-Durchmesser d_{VB}.

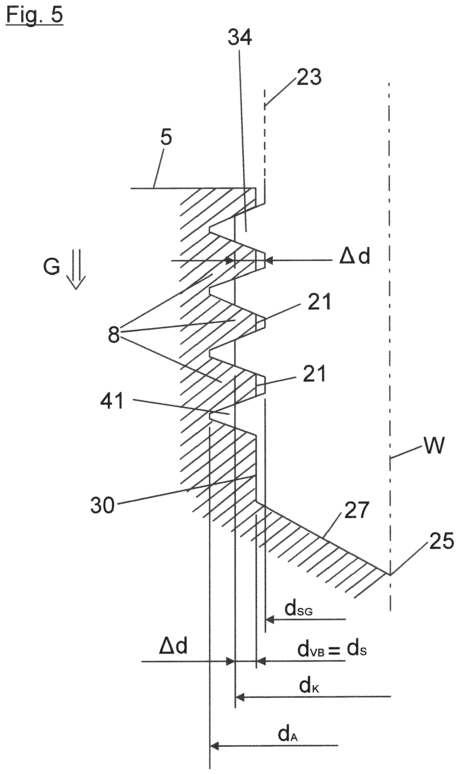

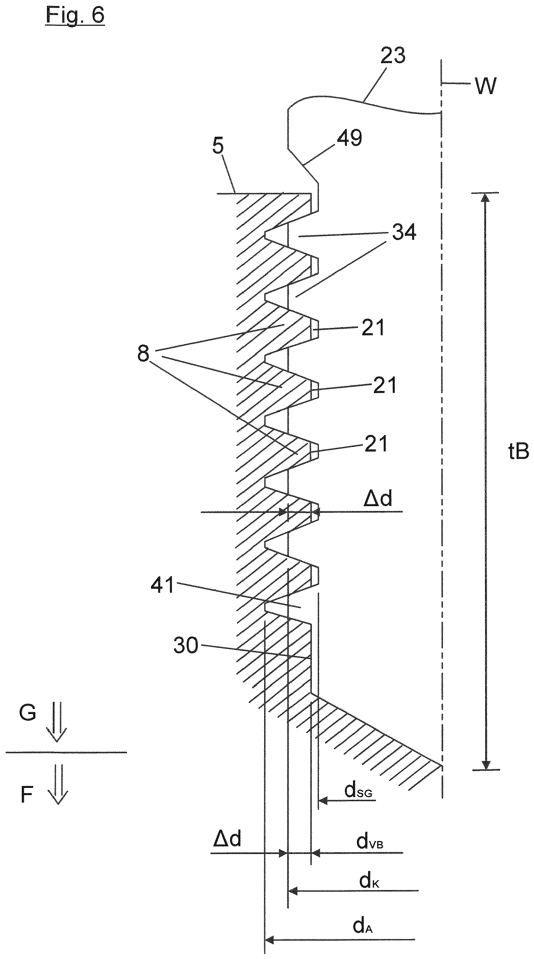

Wie aus der Figur 3 oder 4 weiter hervorgeht, sind die Kerndurchmesser-Schneiden 34 entlang der Werkzeug-Achse W über Schneiden-Lücken 51 voneinander beabstandet. Die Schneiden-Lücken 51 sind derart bemessen, dass im nachfolgend beschriebenen Gewindebohr-Hub G (Figur 5 oder 6) jede Kerndurchmesser-Schneide 34 in einen Gewindegang 15 eines Innengewinde-Rohprofils 8 einragt. Die Anzahl der Kerndurchmesser-Schneiden 34 entspricht dabei mindestens der Anzahl von zu erzeugenden Gewindegängen 15.

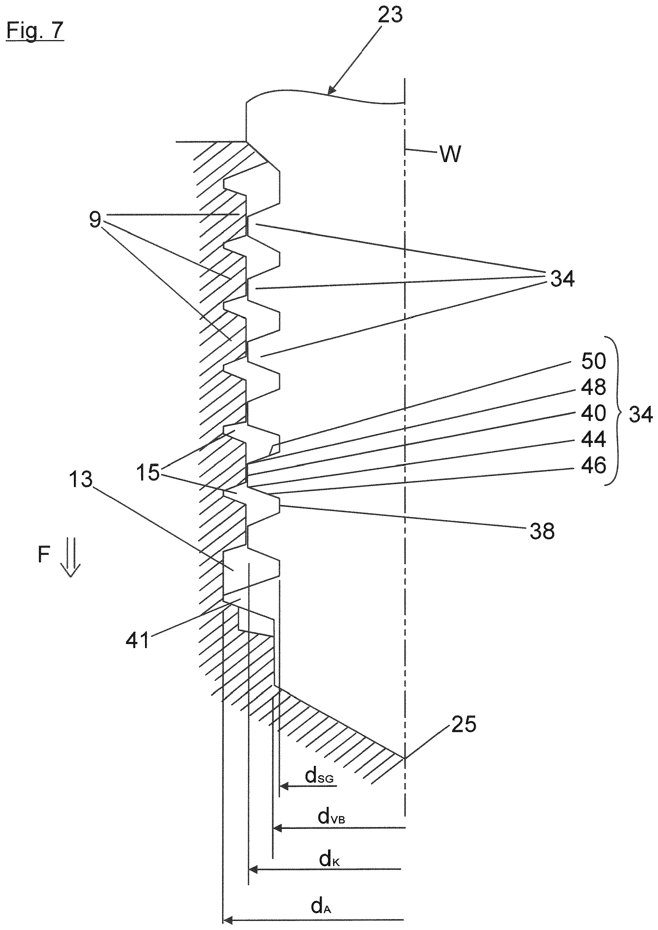

Nachfolgend wird anhand der Figuren 5 bis 8 das Verfahren zur Erzeugung der in der Figur 1 gezeigten Werkstück-Gewindebohrung 1 beschrieben: Demzufolge wird das Gewindebohr-Werkzeug 23 in einer Gewindebohr-Richtung auf das noch nicht vorgebohrte Werkstück 5 geführt und mit einem Gewindebohr-Hub G (Figur 5 oder 6) in das Werkstück 5 eingetrieben. Im Gewindebohr-Hub G erzeugt die Vorbohr-Schneide 27 eine Vorbohrung 30 (Figur 5 oder 6) mit dem Vorbohr-Durchmesser d_{VB}. Der nacheilende Gewindeerzeugungsabschnitt 29 erzeugt an der Innenwandung der Vorbohrung 30 ein Innengewinde-Rohprofil 8 (Figur 6 oder 7). Der Gewindebohr-Hub G wird bei einem Gewindebohr-Vorschub und bei damit synchronisierter Gewindebohr-Drehzahl in einer Gewindebohr-Drehrichtung durchgeführt, und zwar bis die Soll-Gewindetiefe t_{G} erreicht ist. Während des obigen Gewindeform-Hubes G werden die Kerndurchmesser-Schneiden 34 ohne Spaneingriff in den Gewindegängen 15 des Innengewinde-Rohrprofils 8 geführt. Die Schneidenflanken 46, 50 der Kerndurchmesser-Schneiden 34 sind auf den Gewindeflanken 18, 19 der Gewindegänge des Innengewinde-Rohprofils 8 abgestützt, wie in der Figur 5 und 6 gezeigt.

In dem Ausführungsbeispiel der Figuren 4 bis 8 ist der Schneidengrund-Durchmesser d_{SG} der Kerndurchmesser-Schneiden 34 kleiner bemessen als der Vorbohr-Durchmesser d_{VB} der Vorbohr-Schneiden-Ecke 39.

In der Figur 6 ist das Gewindebohr-Werkzeug 23 am Ende des Gewindebohr-Hubs G gezeigt. Unmittelbar anschließend wird ein Freischnitt-Hub (Figur 6 und 7) durchgeführt. Im Unterschied zum Gewindeform-Hub G ist im Freischnitt-Hub die Synchronisation von Vorschub und Drehzahl abgeschaltet. Im Freischnitt-Hub F wird die Drehzahl des Gewindebohr-Werkzeugs 23 abgebremst und es erfolgt eine Drehrichtungsumkehr. Gleichzeitig erzeugt die Senkungs-Schneide 49 die umlaufende Gewindesenkung 7. Zudem tragen im Freischnitt-Hub F die Kerndurchmesser-Schneiden 34 das Durchmesser-Aufmaß Δd am radial inneren Gewindescheitel 21 (Figur 5 und 6) durch Spanbearbeitung bis auf den Gewinde-Kerndurchmesser d_{K} ab. Der im Freischnitt-Hub F erfolgende Materialabtrag des Durchmesser-Aufmaßes Δd erfolgt durch die, der Bohrerspitze 25 zugewandte Schneidenflanke 46 der jeweiligen Kerndurchmesser-Schneide 34, durch die der Bohrerspitze 25 zugewandte Schneiden-Ecke 44 und durch die Längs-Schneidenkante 40.

Im Innengewinde-Rohprofil 8 liegt der radial innere Gewindescheitel 21 (Figur 5 und 6) auf einem Durchmesser ds, der dem Vorbohrdurchmesser d_{VB} entspricht, der um ein Durchmesser-Aufmaß Δd kleiner ist als der Gewinde-Kern-durchmesser d_{K}.

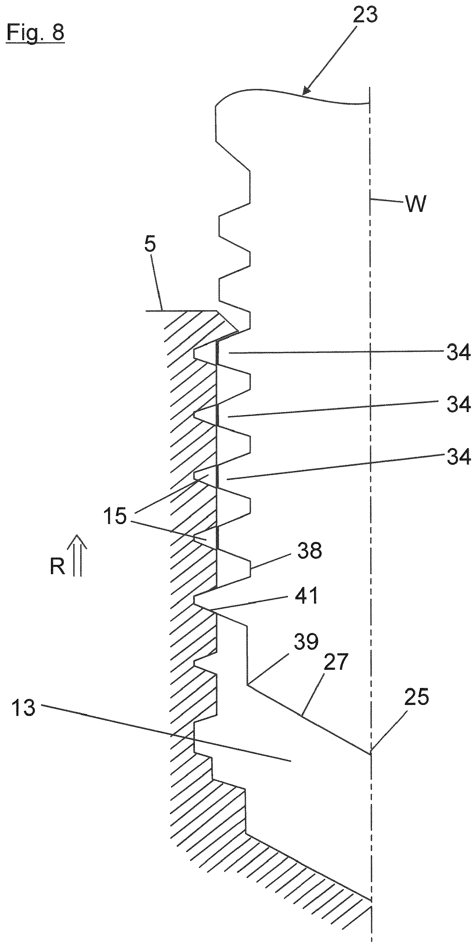

Im Freischnitt-Hub F (Figuren 5 und 6) wird zur Vorbereitung eines Reversier-Hubes R (Figur 8) eine Drehrichtungsumkehr durchgeführt. Im Reversier-Hub R wird das Gewindebohr-Werkzeug 23 in einer Reversier-Richtung aus der Gewindebohrung 1 herausgeführt, und zwar mit einem entgegengesetzten Reversier-Vorschub sowie damit synchronisierter Reversier-Drehzahl. Diese Parameter sind so bemessen, dass der Gewindeerzeugungsabschnitt 29 des Gewindebohr-Werkzeugs 23 im Wesentlichen belastungsfrei in den Gewindegängen 15 des Innengewindes 9 aus der Gewindebohrung geführt wird.

Im Reversier-Hub R (Figur 8) werden die Bearbeitungszähne 41, 42, 43, die Vorbohr-Schneide 27, die Nebenschneide 36 und die Kerndurchmesser-Schneiden 34 belastungsfrei aus der Gewindebohrung 1 herausgeführt.

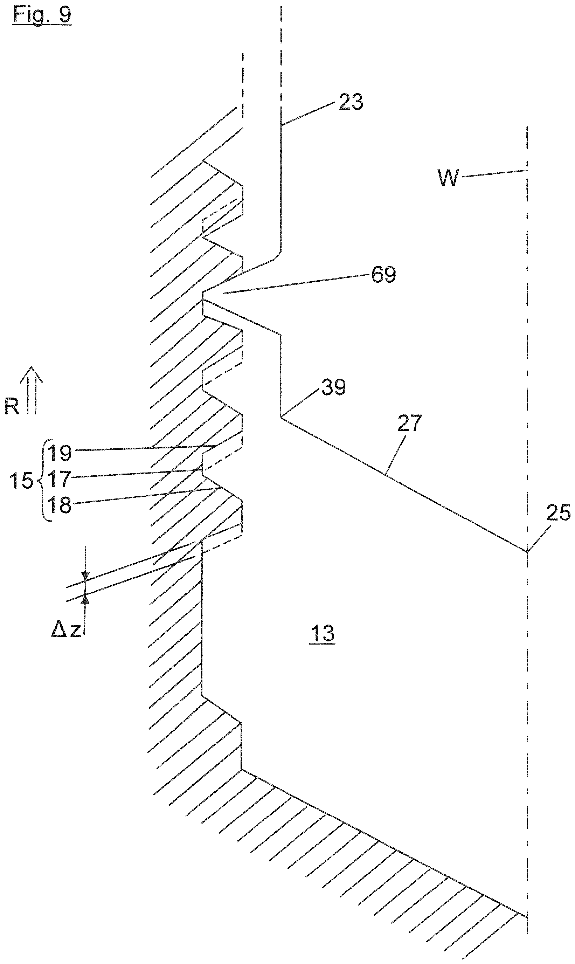

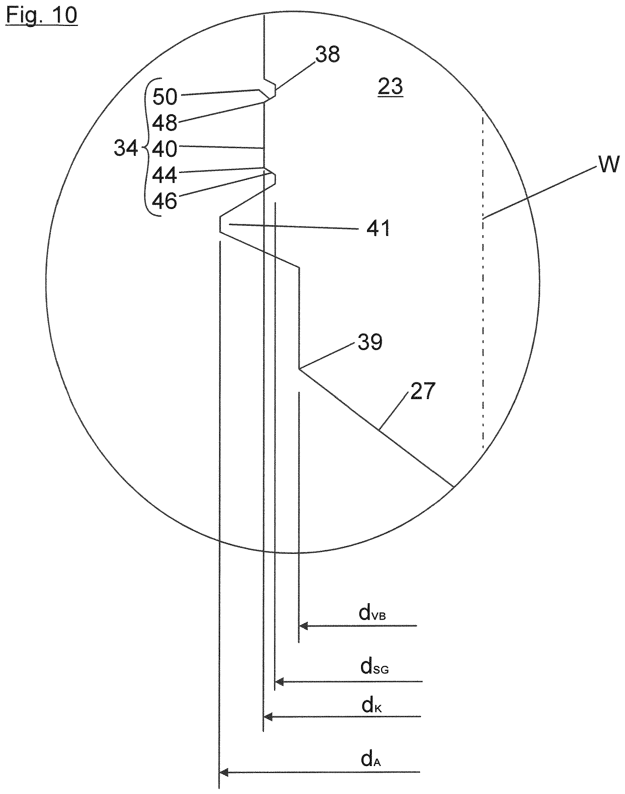

Nachfolgend werden anhand der Figur 9 der Aufbau und die Wirkungsweise eines Gewindebohr-Werkzeugs 23 gemäß einem weiteren Ausführungsbeispiel beschrieben. Das in der Figur 9 gezeigte Gewindebohr-Werkzeug 23 entspricht dem der vorangegangenen Figuren. Von daher wird auf die Vorbeschreibung verwiesen. Das in den Figuren 9 und 10 gezeigte Gewindebohr-Werkzeug 23 weist einen zusätzlichen Reversierzahn 69 auf. Mit dem Reversierzahn 69 wird im Reversier-Hub R ein Flanken-Aufmaß Δz von der spänezugewandten Gewindeflanke 19 abgetragen. Zur Vorbereitung des Reversier-Hubs R wird das Gewindebohr-Werkzeug 23 (nach Abschluss des Freischnitt-Hubs F) mit einer Bearbeitungszugabe so angesteuert, dass der Reversierzahn 69 das Flanken-Aufmaß Δz von der spänezugewandten Gewindeflanke 19 bis auf das Fertigmaß abträgt oder abformt. Der Reversierzahn 69 ist auf der Bohrersteg-Rückenfläche 37 ausgebildet.

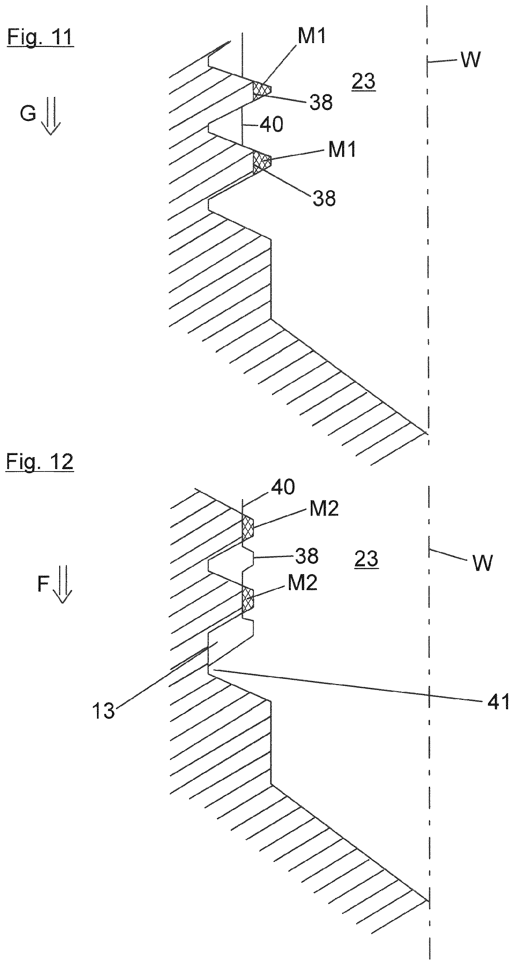

In den Figuren 11, 12 und 13 ist eine alternative Ausführungsform gezeigt, bei dem das Gewindebohr-Werkzeug 23 im Wesentlichen dem der vorangegangenen Figuren entspricht. Von daher wird auf die Vorbeschreibung verwiesen. Der Unterschied zum Ausführungsbeispiel der Figuren 4 bis 8 ist folgender: Der Schneidengrund-Durchmesser d_{SG} ist in den Figuren 11, 12 und 13 nicht kleiner, sondern größer bemessen als der Vorbohr-Durchmesser d_{VB} der Vorbohr-Schneiden-Ecke 39. Dadurch ist der Schneidengrund 38 der Kerndurchmesser-Schneiden 34 im Gewindebohr-Hub G (Figur 11) in Spaneingriff mit dem Innengewinde-Rohprofil 8 ist. In dem in der Figur 11 angedeuteten Gewindebohr-Hub G erfolgt ein erster Materialabtrag M1, bei dem der Schneidengrund 38 der Kerndurchmesser-Schneiden 34 einen Teil des Durchmesser-Aufmaßes Δd abtragen. Im folgenden Freischnitt-Hub F erfolgt ein zweiter Materialabtrag M2, bei dem die Längs-Schneidenkanten 40 der Kerndurchmesser-Schneiden 34 den restlichen Teil des Durchmesser-Aufmaßes Δd abtragen.

### BEZUGSZEICHENLISTE:

- 1: Gewindebohrung
- 3: Bohrungsgrund
- 5: Werkstück
- 7: Gewindesenkung
- 8: Innengewinde-Rohprofil
- 9: Innengewinde
- 11: Gewindeauslauf
- 13: Freischnitt-Nut
- 15: Gewindegang
- 17: radial äußerer Gewindegrund
- 18, 19: Gewindeflanken
- 20: Gewindekern
- 21: Gewindescheitel
- 23: Gewindebohr-Werkzeug
- 24: Werkzeugschaft
- 25: Bohrerspitze
- 27: Vorbohr-Schneide
- 29: Gewindeerzeugungsabschnitt
- 26: Gewindebohr-Körper
- 28: Spannut
- 30: Vohrbohrung
- 31: Spanfläche
- 33: stirnseitige Freifläche
- 34: Kerndurchmesser-Schneiden
- 35: Bohrersteg
- 36: Nebenschneide
- 37: außenumfangsseitige Rückenfläche
- 38: Schneidengrund
- 39: radial äußere Vorbohr-Schneiden-Ecke
- 40: Längs-Schneidenkante
- 41, 42, 43: Bearbeitungszähne
- 44: Schneiden-Ecke
- 46: erste Schneidenflanke
- 48: Schneiden-Ecke
- 49: Senkungs-Schneide
- 50: zweite Schneidenflanke
- 51: Schneiden-Lücken
- 69: Reversierzahn
- dsc: Schneidengrund-Durchmesser
- d_{VB}: Vorbohr-Durchmesser
- d_{A}: Gewinde-Außendurchmesser
- dₗ: Gewinde-Innendurchmesser
- d_{K}: Gewinde-Kerndurchmesser
- ds: Gewindescheitel-Durchmesser
- Δd: Durchmesser-Aufmaß
- Δz: Flanken-Aufmaß
- G: Gewindebohr-Hub
- F: Freischnitt-Hub
- R: Reversier-Hub
- B: Bohrungs-Achse
- W: Werkzeug-Achse
- M1: erster Materialabtrag
- M2: zweiter Materialabtrag

## Patentansprüche

1. Gewindebohr-Werkzeug zur Erzeugung einer Werkstück-Gewindebohrung (1), deren Innengewinde (9) einen Gewinde-Außendurchmesser (d_{A}) und einen Gewinde-Kerndurchmesser (d_{K}) aufweist, wobei das Gewindebohr-Werkzeug (23) in einem Gewindebohr-Hub (G) in das nicht vorgebohrte Werkstück (5) eintreibbar ist, und zwar bis Erreichen einer Soll-Gewindetiefe (t_{G}), wobei mit Erreichen der Soll-Gewindetiefe (t_{G}) sich ein Freischnitt-Hub (F) anschließen kann, in dem die Drehzahl des Gewindebohr-Werkzeugs (23) abgebremst wird und eine Drehrichtungsumkehr erfolgt, und wobei in einem Reversier-Hub (R), das Gewindebohr-Werkzeug (23) in einer gegensinnigen Drehrichtung aus der Werkstück-Gewindebohrung (1) herausführbar ist, wobei an einer Bohrerspitze (25) des Gewindebohr-Werkzeugs (23) zumindest eine stirnseitige Vorbohr-Schneide (27) zur Erzeugung einer Vorbohrung (30) ausgebildet ist, wobei axial versetzt zur Bohrerspitze (25) ein Gewindeerzeugungsabschnitt (29) mit zumindest einem Bearbeitungszahn (41, 42, 43) ausgebildet ist, mit dem im Gewindebohr-Hub (G) in einer Vorbohrungs-Wand ein Innengewinde-Rohprofil (8) erzeugbar ist, bei dem ein radial innerer Gewindescheitel (21) auf einem Scheitel-Durchmesser (ds) liegt, der um ein Durchmesser-Aufmaß (Δd) kleiner ist als der Gewinde-Kerndurchmesser (d_{K}), und wobei das Gewindebohr-Werkzeug (23) zumindest eine Senkungs-Schneide (49) aufweist, mittels der am Öffnungsrand der Werkstück-Gewindebohrung (1) eine Gewindesenkung (7) erzeugbar ist, **dadurch gekennzeichnet, dass** das Gewindebohr-Werkzeug (23) in der Werkzeug-Axialrichtung (W) zwischen dem Gewindeerzeugungsabschnitt (29) und der Senkungs-Schneide (49) eine Anzahl von Kerndurchmesser-Schneiden (34) aufweist, dass im Gewindebohr-Hub (G) die Kerndurchmesser-Schneiden (34) in den Gewindegängen (15) des Innengewinde-Rohprofils (8) führbar sind, dass im Freischnitt-Hub (F) die Kerndurchmesser-Schneiden (34) das Durchmesser-Aufmaß (Δd) am radial inneren Gewindescheitel (21) durch Spanbearbeitung bis auf den Gewinde-Kerndurchmesser (d_{K}) abtragen können,
dass die Kerndurchmesser-Schneide (34) um eine Schneiden-Höhe von einem Schneidengrund (38) nach radial außen abragt, der auf einem Schneidengrund-Durchmesser (dsc) liegt, und dass jede Kerndurchmesser-Schneide (34) eine radial äußere, entlang der Werkzeug-Achse (W) verlaufende Längs-Schneidenkante (40) aufweist, die auf dem Gewinde-Kerndurchmesser (d_{K}) liegt.

2. Gewindebohr-Werkzeug nach Anspruch 1, **dadurch gekennzeichnet, dass** jede Kerndurchmesser-Schneide (34) auf einer Rückenfläche (37) eines Bohrerstegs (35) des Gewindebohr-Werkzeugs (23) ausgebildet ist.

3. Gewindebohr-Werkzeug nach Anspruch 2, **dadurch gekennzeichnet, dass** die Längs-Schneidenkante (40) an einer der Bohrerspitze (25) zugewandten Schneiden-Ecke (44) mit einer Schneidenflanke (46) zusammenläuft, und/oder dass die Schneidenkante (40) an einer dem Werkzeugschaft (24) zugewandten Schneiden-Ecke (48) mit einer Schneidenflanke (50) zusammenläuft, und dass die Schneidenflanken (46, 50) in den Schneidengrund (38) übergehen.

4. Gewindebohr-Werkzeug nach Anspruch 3, **dadurch gekennzeichnet, dass** der im Freischnitt-Hub (F) erfolgende Materialabtrag des Durchmesser-Aufmaßes (Δd) durch die, der Bohrerspitze (25) zugewandte Schneidenflanke (46) der jeweiligen Kerndurchmesser-Schneide (34), durch die der Bohrerspitze (25) zugewandte Schneiden-Ecke (44) und durch die Längs-Schneidenkante (40) erfolgt, und/oder dass die stirnseitige Vorbohr-Schneide (27) an einer radial äußeren Vorbohr-Schneiden-Ecke (39) mit einer entlang der Werkzeug-Achse (W) verlaufenden Nebenschneide (36) zusammenläuft, und dass die radial äußere Vorbohr-Schneiden-Ecke (39) auf einem Vorbohr-Durchmesser (d_{VB}) liegt.

5. Gewindebohr-Werkzeug nach einem der vorhergehenden Ansprüche, **dadurch gekennzeichnet, dass** die Kerndurchmesser-Schneiden (34) entlang der Werkzeug-Achse (W) über Schneiden-Lücken (51) voneinander beabstandet sind, und dass im Gewindebohr-Hub (G) jede Kerndurchmesser-Schneide (34) in einen Gewindegang (15) des Innengewinde-Rohprofils (8) einragt, und/oder dass die Anzahl der Kerndurchmesser-Schneiden (34) mindestens der Anzahl von Gewindegängen (15) in der Werkstück-Gewindebohrung (1) entspricht.

6. Gewindebohr-Werkzeug nach einem der vorhergehenden Ansprüche, **dadurch gekennzeichnet, dass** die Kerndurchmesser (d_{K}) sämtlicher Kerndurchmesser-Schneiden (34) identisch sind, oder dass die Kerndurchmesser (d_{K}) der Kerndurchmesser-Schneiden (34) entlang der Werkzeug-Achse (W) variieren, und/oder dass im Gewindebohr-Hub (G) Späne erzeugt werden, die in einer zum Gewindebohr-Hub (G) gegenläufigen Spanabfuhrrichtung aus der Werkstück-Gewindebohrung (1) gefördert werden, und dass die in die Gewindegänge (15) einragenden Kerndurchmesser-Schneiden (34) die Gewindegänge (15) von den Spänen weitgehend freihalten.

7. Gewindebohr-Werkzeug nach einem der vorhergehenden Ansprüche, **dadurch gekennzeichnet, dass** der Schneidengrund-Durchmesser (dsc) der Kerndurchmesser-Schneiden (34) kleiner oder gleich dem Vorbohr-Durchmesser (d_{VB}) der Vorbohr-Schneiden-Ecke (39) ist, und dass im Gewindebohr-Hub (G) der Schneidengrund (38) der Kerndurchmesser-Schneiden (34) ohne Spaneingriff mit dem Innengewinde-Rohprofil (8) geführt ist, und dass die Schneidenflanken (46, 50) der Kerndurchmesser-Schneiden (34) auf den Gewindeflanken (18, 19) der Gewindegänge (15) des Innengewinde-Rohprofils (8) abgestützt sind, so dass eine Führung des Gewindebohr-Werkzeugs (23) sichergestellt ist.

8. Gewindebohr-Werkzeug nach einem der Ansprüche 1 bis 6, **dadurch gekennzeichnet, dass** der Schneidengrund-Durchmesser (dsc) größer als der Vorbohr-Durchmesser (d_{VB}) der Vorbohr-Schneiden-Ecke (39) ist, und dass im Gewindebohr-Hub (G) der Schneidengrund (38) der Kerndurchmesser-Schneiden (34) in Spaneingriff mit dem Innengewinde-Rohprofil (8) ist.

9. Gewindebohr-Werkzeug nach Anspruch 8, **dadurch gekennzeichnet, dass** im Gewindebohr-Hub (G) ein erster Materialabtrag (M1) erfolgt, bei dem die Kerndurchmesser-Schneiden (34) einen Teil des Durchmesser-Aufmaßes (Δd) abtragen, und dass im Freischnitt-Hub (F) ein zweiter Materialabtrag (M2) erfolgt, bei dem die Kerndurchmesser-Schneiden (34) den restlichen Teil des Durchmesser-Aufmaßes (Δd) abtragen.

10. Gewindebohr-Werkzeug nach einem der Ansprüche 5 bis 9, **dadurch gekennzeichnet, dass** die im Gewindebohr-Hub (G) erzeugten Späne zumindest teilweise mit einer spänezugewandten Gewindeflanke (19) des Innengewinde-Rohprofils (8) kollidieren, und/oder dass insbesondere der Gewindeerzeugungsabschnitt (29) zumindest einen Reversierzahn (69) aufweist, mittels dem beim Reversier-Hub (R) ein Flanken-Aufmaß (Δz) von der spänezugewandten Gewindeflanke (19) abtragbar und/oder abformbar ist, und zwar unter Fertigstellung des Werkstück-Innengewindes (9).

## Claims

1. Tapping tool for producing a threaded bore (1) of a workpiece, the inner thread (9) of which has a thread outer diameter (d_{A}) and a thread core diameter (d_{K}), wherein the tapping tool (23) in a tapping stroke (G) can be driven into the not pre-drilled workpiece (5) specifically until a target thread depth (t_{G}) is reached, wherein when the target thread depth (t_{G}) is reached a free-cutting stroke (F) can follow, in which the rotational speed of the tapping tool (23) is braked and a reversal of rotational direction takes place, and wherein in a reversing stroke (R) the tapping tool (23) can be guided out of the threaded bore (1) of the workpiece in an opposite rotational direction, wherein at a drill tip (25) of the tapping tool (23) is formed at least one pre-drill blade (27) on the end face for creating a pre-drill (30), wherein axially offset to the drill tip (25) is formed a thread-generating portion (29) having at least one processing tooth (41, 42, 43), with which in the tapping stroke (G) in a pre-drill wall an inner thread raw profile (8) can be generated, in which a radially inner thread apex (21) lies on an apex diameter (ds) which is smaller by a diameter oversize (Δd) than the thread core diameter (d_{K}), and wherein the tapping tool (23) has at least one countersink blade (49) by means of which a countersinking (7) can be generated at the opening edge of the threaded bore (1) of the workpiece, **characterized in that** the tapping tool (23) has in tool axial direction (W) between the thread-generating portion (29) and the countersink blade (49) a number of core diameter blades (34), that in the tapping stroke (G) the core diameter blades (34) can be guided in the thread turns (15) of the inner thread raw profile (8), that in the free-cutting stroke (F) the core diameter blades (34) can remove the diameter oversize (Δd) at the radially inner thread apex (21) by means of machining as far as the thread core diameter (d_{K}),
that the core diameter blade (34) protrudes radially to the outside by a blade height from a blade base (38), which lies on a blade base diameter (d_{SG}), and that each core diameter blade (34) has a radially outer longitudinal cutting edge (40), extending along the tool axis (W), which lies on the thread core diameter (d_{K}).

2. Tapping tool according to claim 1, **characterized in that** each core diameter blade (34) is formed on a rear surface (37) of a drill web (35) of the tapping tool (23).

3. Tapping tool according to claim 2, **characterized in that** the longitudinal cutting edge (40) converges at a blade corner (44) facing the drill tip (25) with a cutting flank (46), and/or that the cutting edge (40) converges at a blade corner (48) facing the tool shaft (24) with a cutting flank (50), and that the cutting flanks (46, 50) transition into the blade base (38).

4. Tapping tool according to claim 3, **characterized in that** the material removal of the diameter oversize (Δd) occurring in the free-cutting stroke (F) is carried out by the cutting flank (46), facing the drill tip (25), of the respective core diameter blade (34), by the blade corner (44) facing the drill tip (25) and by the longitudinal cutting edge (40), and/or that the pre-drill blade (27) on the end face converges at a radially outer pre-drill blade corner (39) with a secondary plate (36) running along the tool axis (W), and that the radially outer pre-drill blade corner (39) lies on a pre-drill diameter (d_{VB}).

5. Tapping tool according to any of the preceding claims, **characterized in that** the core diameter blades (34) are spaced from one another along the tool axis (W) via cutting gaps (51), and that in the tapping stroke (G) each core diameter blade (34) protrudes into a thread turn (15) of the inner thread raw profile (8), and/or that the number of the core diameter blades (34) is equal at least to the number of thread turns (15) in the threaded bore (1) of the workpiece.

6. Tapping tool according to any of the preceding claims, **characterized in that** the core diameters (d_{K}) of all core diameter blades (34) are identical, or that the core diameters (d_{K}) of the core diameter blades (34) along the tool axis (W) vary, and/or that in the tapping stroke (G) shavings are generated which are conveyed out of the threaded bore (1) of the workpiece in a shaping removal direction opposite to the tapping stroke (G), and that the core diameter blades (34) protruding into the thread turns (15) keep the thread turns (15) mostly free of the shavings.

7. Tapping tool according to any of the preceding claims, **characterized in that** the blade base diameter (d_{SG}) of the core diameter blades (34) is less than or equal to the pre-drill diameter (dve) of the pre-drill blade corner (39), and that in the tapping stroke (G) the blade base (38) of the core diameter blades (34) is guided without machining engagement with the inner thread raw profile (8), and that the cutting flanks (46, 50) of the core diameter blades (34) are supported on the thread flanks (18, 19) of the thread turns (15) of the inner thread raw profile (8), such that a guiding of the tapping tool (23) is ensured.

8. Tapping tool according to any of claims 1 to 6, **characterized in that** the blade base diameter (d_{SG}) is greater than the pre-drill diameter (d_{VB}) of the pre-drill blade corner (39), and that in the tapping stroke (G) the blade base (38) of the core diameter blades (34) is in machining engagement with the inner thread raw profile (8).

9. Tapping tool according to claim 8, **characterized in that** in the tapping stroke (G) a first material removal (M1) takes place, in which the core diameter blades (34) remove a part of the diameter oversize (Δd), and that in the free-cutting stroke (F) a second material removal (M2) takes place, in which the core diameter blades (34) remove the remaining part of the diameter oversize (Δd).

10. Tapping tool according to any of claims 5 to 9, **characterized in that** the shavings generated in the tapping stroke (G) collide at least partially with a thread flank (19) of the inner thread raw profile (8) facing the shavings, and/or that in particular the thread-generating portion (29) has at least one reversing tooth (69), by means of which in the reversing stroke (R) a flank oversize (Δz) can be removed and/or can be deformed from the thread flank (19) facing the shavings and specifically while finishing the workpiece inner thread (9).

## Revendications

1. Outil de taraudage pour réaliser un trou fileté de pièce (1), dont le filet intérieur (9) présente un diamètre extérieur de filet (d_{A}) et un diamètre de noyau de filet (d_{K}), dans lequel l'outil de taraudage (23) peut être enfoncé dans la pièce non prépercée (5) lors d'une course de taraudage (G), et ce, jusqu'à atteindre une profondeur de filet de consigne (t_{G}), dans lequel une course de coupe libre (F) peut suivre lorsque la profondeur de filet de consigne (t_{G}) est atteinte, dans laquelle la vitesse de rotation de l'outil de taraudage (23) est freinée et une inversion de sens de rotation est effectuée, et dans lequel l'outil de taraudage (23) peut être sorti, dans une course d'inversion (R), hors du trou fileté de pièce (1) dans une direction de rotation opposée, dans lequel, au niveau d'une pointe de foret (25) de l'outil de taraudage (23), au moins une lame d'avant-trou frontale (27) est conçue pour produire un avant-trou (30), dans lequel une section de réalisation de filet (29) est conçue avec au moins une dent d'usinage (41, 42) décalée axialement par rapport à la pointe de foret (25, 43), avec laquelle un profilé brut de filet intérieur (8) peut être réalisé dans une paroi de prétrou dans la course de taraudage (G), dans lequel un sommet de filet radialement intérieur (21) se situe sur un diamètre de sommet (d_{S}), qui est plus petit d'une surépaisseur de diamètre (Δd) que le diamètre de noyau de filet (d_{K}), et dans lequel l'outil de taraudage (23) présente au moins une lame de fraisage (49), au moyen de laquelle un creux de filet (7) peut être réalisé au niveau du bord d'ouverture du trou fileté de pièce (1), **caractérisé en ce que** l'outil de taraudage (23) présente un certain nombre de lames de diamètre de noyau (34) dans la direction axiale de l'outil (W) entre la section de réalisation de filet (29) et la lame de fraisage (49), **en ce que**, dans la course de taraudage (G), les lames de diamètre de noyau (34) peuvent être guidées dans les pas de vis (15) du profilé brut de filet intérieur (8), **en ce que**, dans la course de coupe libre (F), les lames de diamètre de noyau (34) peuvent enlever la surépaisseur de diamètre (Δd) au sommet de filet radialement intérieur (21) par usinage par enlèvement de copeaux jusqu'au diamètre de noyau de filet (d_{K}),
**en ce que** la lame de diamètre de noyau (34) fait saillie radialement vers l'extérieur d'une hauteur de lame à partir d'une base de lame (38) qui se situe sur un diamètre de base de lame (d_{SG}), et **en ce que** chaque de lame de diamètre de noyau (34) présente un bord de lamelongitudinal (40) radialement extérieur, s'étendant le long de l'axe d'outil (W), qui se situe sur le diamètre de noyau de filet (d_{K}).

2. Outil de taraudage selon la revendication 1, **caractérisé en ce que** chaque lame de diamètre de noyau (34) est formée sur une surface arrière (37) d'une barrette de foret (35) de l'outil de taraudage (23).

3. Outil de taraudage selon la revendication 2, **caractérisé en ce que** le bord de lame longitudinal (40) converge avec un flanc de lame (46) au niveau d'un coin de lame (44) tourné vers la pointe de foret (25), et/ou **en ce que** le bord de lame (40) converge avec un flanc de lame (50) au niveau d'un coin de lame (48) tourné vers la tige d'outil (24), et **en ce que** les flancs de lame (46, 50) se prolongent dans la base de lame (38).

4. Outil de taraudage selon la revendication 3, **caractérisé en ce que** l'enlèvement de matière de la tolérance de diamètre (Δd), qui s'effectue lors de la course de coupe libre (F), est effectuée par le flanc de lame (46) tourné vers la pointe de foret (25), de la lame de diamètre d'âme respective (34), par le coin de lame (44) tourné vers la pointe de foret (25) et par le bord de lame longitudinal (40), et/ou **en ce que** la lame d'avant-trou frontale (27) converge, au niveau d'un coin de lame d'avant-trou (39) radialement extérieur, avec une lame secondaire (36) s'étendant le long de l'axe d'outil (W), et **en ce que** le coin de lame d'avant-trou (39) radialement extérieur se situe sur un diamètre d'avant-trou (d_{VB}).

5. Outil de taraudage selon l'une quelconque des revendications précédentes, **caractérisé en ce que** les lames de diamètre de noyau (34) sont espacées les unes des autres le long de l'axe d'outil (W) par des intervalles de coupe (51), et **en ce que**, lors de la course de taraudage (G), chaque lame de diamètre de noyau (34) pénètre dans un pas de vis (15) du profilé brut de filet intérieur (8), et/ou **en ce que** le nombre de lames de diamètre de noyau (34) correspond au moins au nombre de pas de vis (15) dans le trou taraudé de pièce (1).

6. Outil de taraudage selon l'une quelconque des revendications précédentes, **caractérisé en ce que** les diamètres de noyau (d_{K}) de toutes les lames de diamètre de noyau (34) sont identiques, ou **en ce que** les diamètres de noyau (d_{K}) des lames de diamètre de noyau (34) varient le long de l'axe d'outil (W), et/ou **en ce que** des copeaux sont produits lors de la course de taraudage (G), lesquels sont transportés hors du trou taraudé de pièce (1) dans une direction d'élimination de copeaux opposée à la course de taraudage (G), et **en ce que** les lames de diamètre de noyau (34) pénétrant dans les pas de vis (15) maintiennent les pas de vis (15) largement exempts de copeaux.

7. Outil de taraudage selon l'une quelconque des revendications précédentes, **caractérisé en ce que** le diamètre de base de lame (d_{SG}) des lames de diamètre de noyau (34) est inférieur ou égal au diamètre d'avant-trou (d_{VB}) du coin de lame d'avant-trou (39), et **en ce que** dans la course de taraudage (G), la base de lame (38) des lames de diamètre de noyau (34) est guidée sans sollication d'enlèvement avec le profilé brut de filet intérieur (8), et **en ce que** les flancs de lame (46, 50) des lames de diamètre de noyau (34) s'appuient sur les flancs filetés (18, 19) des pas de vis (15) du profilé brut de filet intérieur (8), de sorte qu'un guidage de l'outil de taraudage (23) est assuré.

8. Outil de taraudage selon l'une quelconque des revendications 1 à 6, **caractérisé en ce que** le diamètre de base de lame (d_{SG}) est supérieur au diamètre d'avant-trou (d_{VB}) du coin de lame d'avant-trou (39), et **en ce que**, lors de la course de taraudage (G), la base de lame (38) des lames de diamètre de noyau (34) est en sollicitation d'enlèvement avec le profilé brut de filet intérieur (8).

9. Outil de taraudage selon la revendication 8, **caractérisé en ce que,** dans la course de taraudage (G), un premier enlèvement de matière (M1) est effectué, lors duquel les lames de diamètre de noyau (34) enlèvent une partie de la tolérance de diamètre (Δd), et **en ce que** dans la course de coupe libre (F), un second enlèvement de matière (M2) est effectué, lors duquel les lames de diamètre de noyau (34) enlèvent la partie restante de la surépaisseur de diamètre (Δd).

10. Outil de taraudage selon l'une quelconque des revendications 5 à 9, **caractérisé en ce que** les copeaux produits lors de la course de taraudage (G) entrent au moins partiellement en collision avec un flanc fileté (19) du profilé brut de filet intérieur (8) tourné vers les copeaux, et/ou **en ce que**, en particulier, la section de réalisation de filet (29) présente au moins une dent d'inversion (69) au moyen de laquelle, lors de la course d'inversion (R), une surépaisseur de flanc (Δz) peut être enlevée du flanc fileté (19) tourné vers les copeaux et/ou peut être formée, et ce, en achevant le filet intérieur de pièce (9).
